# EUROPEAN PATENT APPLICATION

(11) **EP 4 394 272 A1**
(43) Date of publication of application: **03.07.2024**
(21) Application number: 22862596.8
(22) Date of filing: 22.03.2022
(51) Int. Cl.: F24F 11/00

(54) **RECOMMENDING METHOD FOR AIR CONDITIONER, AIR CONDITIONER, AND READABLE STORAGE MEDIUM**

(30) Priority: 31.08.2021 CN 202111018848
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: FAN, Qifeng, Foshan, Guangdong 528311 (CN)
(74) Representative: RGTH
(86) International application number: PCT/CN2022/082320
(87) International publication number: WO 2023/029449

(57) **Abstract**

The present application discloses a recommendation method for an air conditioner, an air conditioner, and a computer-readable storage medium. The air conditioner includes an installation position, and at least one air treatment module is selectively installed in the installation position. The recommendation method includes: obtaining environmental data of an environment where a target air conditioner is located and an installed air treatment module of the target air conditioner; the environmental data includes at least one of user information and environmental information; determining a target object according to the environmental data and the installed air treatment module; the target object includes target function and/or target mode; and generating recommendation information corresponding to the target object, and outputting the recommendation information.

## Description

The present application claims priority to Chinese Patent Application No. 202111018848.3, filed on August 31, 2021, the entire contents of which are incorporated herein by reference.

### TECHNICAL FIELD

The present application relates to the technical field of air conditioners, in particular to a recommendation method for an air conditioner, an air conditioner, and a readable storage medium.

### BACKGROUND

Along with the raising of production level, air conditioner has become common household appliance in people's life. Generally speaking, the structure and function of the air conditioner are solidified when it leaves the factory. When purchasing, the user purchases the corresponding air conditioner according to the currently required function or mode. However, with the change of time and living environment, the demand for air conditioners may also change. At this time, air conditioners with fixed functions or modes cannot meet the needs of users. According to this, by modularizing the functions of the air conditioner, users can adjust the functions or modes of the air conditioner according to the functional modules. However, users do not know the functions suitable for the current environment, so users generally update the functions of the air conditioner at random, resulting in limitations of the air conditioner.

It should be noted that the above content is only used to assist in understanding the technical problems solved by the present application, and does not mean acknowledging that the above content is the prior art.

### SUMMARY

### TECHNICAL PROBLEM

The main purpose of the present application is to provide a recommendation method for an air conditioner, an air conditioner and a readable storage medium, aiming to achieve the purpose of making the air conditioner universal.

### TECHNICAL SOLUTION

In order to achieve the above purpose, the present application provides a recommendation method for an air conditioner, the air conditioner includes an installation position where at least one air treatment module is selectively installed, characterized by including:
obtaining environmental data of an environment where a target air conditioner is located and an installed air treatment module of the target air conditioner; the environmental data includes at least one of user information and environmental information;
determining a target object according to the environmental data and the installed air treatment module; the target object includes target function and/or target mode; and
generating recommendation information corresponding to the target object, and outputting the recommendation information.

In an embodiment, the determining the target object according to the environmental data and the installed air treatment module includes:
determining an appropriate first target object according to the user information and/or the environmental information; the user information includes at least one of user identity and user historical behavior data, and the environmental information includes an air environment and/or a location;
determining the first target object supported by the target air conditioner according to the installed air treatment module; and
determining the target object according to the first target object and the second target object.

In an embodiment, before the generating the recommendation information corresponding to the target object, and outputting the recommendation information, the method further includes:
determining whether the target object exists in the target air conditioner; and
in response to that the target object does not exist in the target air conditioner, performing the generating the recommendation information corresponding to the target object and outputting the recommendation information.

In an embodiment, the generating the recommendation information corresponding to the target object and outputting the recommendation information includes:
generating the recommendation information corresponding to the target object, and displaying the recommendation information on a display interface in a preset display manner.

In an embodiment, after the generating the recommendation information corresponding to the target object and outputting the recommendation information, the method further includes:
receiving subscription information, and determining a target firmware corresponding to the target object according to the subscription information; and
authorizing an use authority of the target firmware, so that the target air conditioner implements running the target object according to the target firmware.

In an embodiment, after the authorizing the use authority of the target firmware, the method further includes:
displaying the target object corresponding to the target firmware.

In an embodiment, after the receiving subscription information, and determining the target firmware corresponding to the target object according to the subscription information, the method further includes:
obtaining an installed firmware of the target air conditioner; and
in response to that the installed firmware includes the target firmware, performing the authorizing the use authority of the target firmware.

In an embodiment, after the obtaining the installed firmware of the target air conditioner, the method further includes:
in response to that the installed firmware does not include the target firmware, downloading the target firmware and installing the target firmware.

The present application also provides an air conditioner, characterized by including:
a memory;
a processor; and
a recommendation program stored in the memory and operable on the processor;
when the recommendation program is executed by the processor, the steps of the recommendation method for the air conditioner are realized.

The present application also provides a cloud server, including: a memory, a processor, and a recommendation program stored in the memory and operable on the processor; when the recommendation program is executed by the processor, the steps of the recommendation method for the air conditioner are realized.

In an embodiment, the cloud server is connected to the air conditioner, or a control terminal of the air conditioner.

In addition, the present application also provides a readable storage medium, storing a recommendation program; characterized in that when the recommendation program is executed by a processor, the steps of the recommendation method for the air conditioner are realized.

### BENEFICIAL EFFECT

The present application provides a recommendation method for an air conditioner, an air conditioner and a readable storage medium. According to the target air conditioner having an installation position, and the installation position can selectively install an air treatment module, so that the target air conditioner has the capability for supporting various functions and /or modes. According to this, by configuring some functions and/or modes before leaving the factory, during use, according to the environmental data of the environment where the target air conditioner is located and the installed air treatment module of the target air conditioner, the current required target functions and and/or target modes are determined; then the target functions and/or target modes are recommended to the target air conditioner. That is to say, some functions and/or modes are recommended to the user when the user needs it, which can not only reduce the purchase cost, but also allow the user to subscribe and use timely. The functions and/or modes supported by the target air conditioner are determined based on user information and environmental information, so that the air conditioner has universal applicability.

### BRIEF DESCRIPTION OF THE DRAWINGS

FIG. 1 is a schematic diagram of a hardware architecture of a terminal according to an embodiment of the present application.
FIG. 2 is a schematic flowchart of a recommendation method for an air conditioner according to a first embodiment of the present application.
FIG. 3 is a schematic flowchart of the recommendation method for the air conditioner according to a second embodiment of the present application.
FIG. 4 is a schematic flowchart of the recommendation method for the air conditioner according to a third embodiment of the present application.

The realization, functional features and advantages of the present application will be further described in conjunction with the embodiments and with reference to the accompanying drawings.

### DETAILED DESCRIPTION OF THE EMBODIMENTS

It should be understood that the specific embodiments described here are only used to explain the present application, and are not intended to limit the present application.

Because the structure and function of traditional air conditioners are solidified when they leave the factory. When purchasing, the user purchases the corresponding air conditioner according to the currently required function or mode. However, with the change of time and living environment, the demand for air conditioners may also change. At this time, air conditioners with fixed functions or modes cannot meet the needs of users. Users need to replace the air conditioner, and each replacement will increase the hardware cost, which leads to poor user experience. It can be seen that the air conditioner has limitations.

According to this, the present application combines the specific structure of the air conditioner proposed in this embodiment, and proposes an air conditioner that can continuously update or upgrade functions or modes to recommended users during use and a recommendation method for the air conditioner. After the user chooses to subscribe and purchase the function or mode, the air conditioner can run the function and/or mode through firmware download or firmware usage authorization. In this way, after the user uses the air conditioner in the embodiment of the present application, when there are different control requirements corresponding to different times, the function or mode of the air conditioner can be updated by subscribing to the recommended function or mode, and then this function or mode can be used by the air conditioner, without replacing the air conditioner. The hardware cost of replacing the air conditioner can be saved and the use experience of the air conditioner can be improved.

In an embodiment, the air conditioner in this embodiment modularizes the functions it can achieve to form various air treatment modules, and the air treatment modules are detachably installed on the air conditioner. Different functions can be realized according to different air treatment modules, and different combinations of air modules can realize different modes. Thus, the air conditioner in this embodiment can form multiple functions or modes.

In an embodiment, the indoor unit of the air conditioner is provided with an installation position, and the air treatment module is detachably installed in the installation position. When the air conditioner is running, the air treatment module processes the air in order to achieve the corresponding adjustment function.

In some embodiments, the function or mode of the air conditioner is not compared all the time.

In order to better understand the above-mentioned technical solutions, exemplary embodiments of the present application will be described in more detail below with reference to the accompanying drawings. Although exemplary embodiments of the present application are shown in the drawings, it should be understood that the present application may be embodied in various forms and should not be limited by the embodiments set forth herein. Rather, these embodiments are provided for more thorough understanding of the present application and to fully convey the scope of the present application to those skilled in the art.

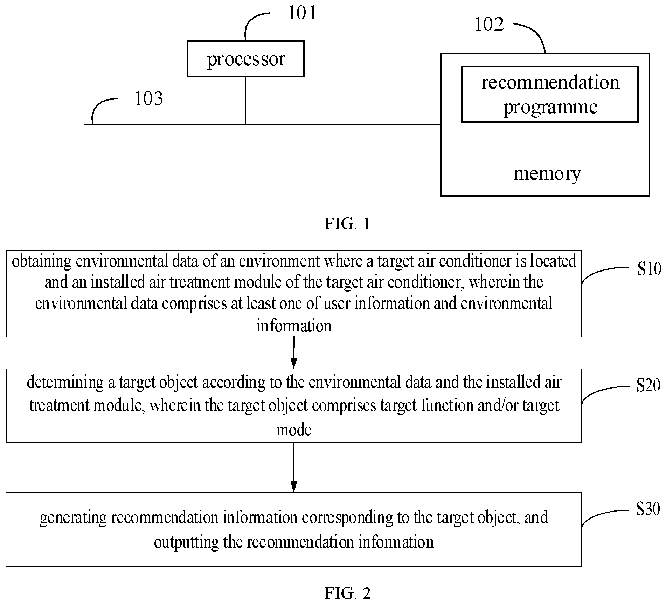

As an implementation manner, the hardware environment architecture involved in the recommendation method for the air conditioner may be as shown in FIG. 1.

In an embodiment, the hardware architecture involved in the recommendation method for the air conditioner may include a terminal, such as a mobile terminal, a cloud server, or a terminal with a display interface such as a central control device of the air conditioner, such as a large screen, or a display panel of the air conditioner; the terminal is used to control the air conditioner. The hardware architecture involved in the recommended method for the air conditioner may also be an air conditioner with a processor and a display panel.

As an implementation manner, the terminal or the air conditioner includes: a processor 101 , such as a CPU, a memory 102 , and a communication bus 103. The communication bus 103 is configured to realize connection and communication between these components. The processor 101 is configured to invoke an application program to perform a recommendation operation.

The memory 102 may be a high-speed RAM, or a stable memory (non-volatile memory), such as a disk memory.

It can be understood that, in an embodiment, the recommendation program implementing the recommendation process of the air conditioner is stored in the terminal or the memory 102 of the air conditioner; and when the processor 101 calls the recommendation program from the memory 102, the following recommendation process below is performed:
obtaining environmental data of an environment where a target air conditioner is located and an installed air treatment module of the target air conditioner; the environmental data includes at least one of user information and environmental information;
determining a target object according to the environmental data and the installed air treatment module; the target object includes target function and/or target mode; and
generating recommendation information corresponding to the target object, and outputting the recommendation information.

In another embodiment, the recommendation program for implementing the update process of the air conditioner may also be stored in a computer-readable storage medium, and when the storage medium is applied to a computer, the processor 101 of the computer may read can invoke the recommendation program in the storage medium to execute the above-mentioned recommendation process.

According to the above hardware architecture of the air conditioner, the following embodiments of the present application are proposed.

### First embodiment:

Please referring to FIG. 2, the updating method of the air conditioner proposed in this embodiment includes:
Step S 10, obtaining environmental data of the environment where the target air conditioner is located and the installed air treatment module of the target air conditioner; the environmental data includes at least one of user information and environmental information;
Step S20, determining a target object according to the environmental data and the installed air treatment module; the target object includes a target function and/or a target mode;
Step S30, generating recommendation information corresponding to the target object, and outputting the recommendation information.

The control process of the air conditioner in this embodiment can be executed on the air conditioner, and can also be executed on the cloud server. This embodiment is described by taking execution on a cloud server as an example.

The air conditioner in this embodiment is a cabinet air conditioner, and the indoor unit of the air conditioner is provided with at least one installation position, and the installation position is used for selectively installing an air treatment module. The air treatment module includes but not limited to the following air treatment modules, such as purification module, humidification module, negative ion module, formaldehyde removal module, filtration module, odor removal module, disinfection and sterilization module, mute module, oxygenation module etc.

One of the air treatment modules can achieve at least one function, or at least two air treatment modules can achieve one mode. If the purification module is installed in the air conditioner, combined with the control of the purification function firmware, the purification module can achieve the purification function. For example, the purification module and the formaldehyde removal mode realize a new house mode, combined with the control of the new house mode firmware, the purification module and the formaldehyde removal mode realize the corresponding adjustment of the new house mode when running. Different air treatment modules correspond to different functions, and different combinations of air treatment modules correspond to different realization modes. In an embodiment, the modes include, but are not limited to, new house mode, furniture mode, new decoration mode, pregnant woman or confinement mode, pet mode, special period mode, three generations living together mode, etc.

It can be seen that, according to the fact that the air treatment module is detachable at the installation position, the air conditioner in this embodiment can realize various functions or modes by replacing different air treatment modules. Therefore, the air conditioner has the ability to perform various functions or modes.

When the air conditioner performs different functions or modes, it needs different corresponding firmware. If the firmware for all the functions or modes that can be realized is set in the air conditioner, it will not only increase the cost of the air conditioner, but also increase the memory capacity of the air conditioner, which will affect the use of the air conditioner. In fact, the air conditioner users are less likely to use multiple functions and/or modes in the same period.

According to this, this embodiment proposes an air conditioner with only some built-in firmware of functions and/or modes when it leaves the factory. The air conditioner has the ability to run various functions and/or modes, but it can currently only run some functions and/or modes based on firmware with only some functions and/or modes built-in. In this way, the sales cost of the air conditioner can be reduced, and more people can afford it. Then, during the use of the air conditioner, according to the user's needs or the needs of the environment where the air conditioner is located, the function and/or mode that suits the user's current needs is recommended to the user. Through time-segment recommendations, users can purchase functions and/or modes by time segments, which reduces the pressure of one-time purchases and enables users to purchase smart air conditioners that can be continuously updated and upgraded at a lower cost, thereby making the air conditioner more universal.

In an embodiment, in this embodiment, the cloud server acquires the environmental data of the target air conditioner and the installed air treatment modules of the target air conditioner in real time or periodically, and determines the target object according to the environmental data and the installed air treatment modules; the target object includes the target function and/or target mode; then the recommendation information corresponding to the target object is generated to the target air conditioner or a mobile terminal communicating with the target air conditioner, and the recommendation information is output.

In this embodiment, the cloud server determines the current hardware support of the target air conditioner according to the functions and/or modes supported by the currently installed air treatment module of the target air conditioner, combined with the current environmental data of the location of the target air conditioner. And the cloud server adapts the target function and/or target mode that the user currently needs, and then recommends the function and/or mode to the user, and provides the user with the required function and/or mode in time, so that the user experience is better.

In some embodiments, the cloud server directly communicates with the target air conditioner, and the environment data is determined through historical operation data of the target air conditioner. Alternatively, in some embodiments, the cloud server communicates with the mobile terminal to determine the environment data according to the user's control operation on the air conditioner on the mobile terminal.

The environment data includes at least one of user information and environment information. The user information includes at least one of user identity information, user history setting information, and user behavior information, and the environmental information includes ambient temperature, humidity, air quality, and the like. The user identity information may be identified according to the user image collected by the target air conditioner or the camera of the mobile terminal, the IP identification information of the mobile terminal, or by the camera, fingerprint, voiceprint, and the like. The environmental information may be obtained according to sensor detection on the target air conditioner, or according to operating data stored in the target air conditioner or the mobile terminal.

In an embodiment, the installed air treatment modules of the target air conditioner may be the air treatment modules recorded in the target air conditioner, such as some air treatment modules that have been purchased but are not currently installed in the target air conditioner , and the currently installed air treatment module identified by the installation position of the target air conditioner. Alternatively, the target air conditioner stores usage information of the air treatment modules, such as the identification of each used air treatment module and the remaining service life of the air treatment modules. The cloud server determines the functions and/or modes that the target air conditioner can currently support according to the usage information. The supported functions and/or modes determined by the usage information make more choices of functions and/or modes, and ensure that the functions and/or modes are supported by the hardware of the target air conditioner.

The cloud server may obtain the installed air treatment module directly through the target air conditioner, or obtain the installed air treatment module through the mobile terminal.

In an embodiment, the step of determining the target object according to the environmental data and the installed air treatment module includes:
determining the appropriate first target object according to the user information and/or the environmental information; the user information includes at least one of user identity and user historical behavior data, and the environmental information includes air environment and/or location;
determining a first target object supported by the target air conditioner according to the installed air treatment module;
determining the target object according to the first target object and the second target object.

In an embodiment, a first target function and/or a first target mode adapted to the user information and the environment information are determined according to the user information and/or the environment information, and the second target function and/or the second target mode sustained by the current hardware of the target air conditioner are determined based on the installed air treatment module. Then the same function and/or mode from the first target function and/or the first target mode are obtained, the second target function and/or the second target mode, and the same function and/or mode are configured as the recommended target object (target function and/or mode). Or, in some embodiments, a first target function and/or a first target mode adapted to the user information and the environment information are determined according to the user information and/or the environment information; and then the second target function and/or the second target mode supported by the current hardware of the target air conditioner from the first target function and/or the first target mode are determined according to the installed air treatment module; and then the second target and/or the second target mode are configured to determine the target object (target function and/or mode).

In an embodiment, the implementation of determining the adapted first target function and/or first target mode according to user information and/or environment information includes but is not limited to the following:

If the user information includes children or the elderly, the smart eye function is recommended, such as turning on the smart eye to identify the user's location, and/or recommending the windless mode, to prevent the wind from blowing directly on the elderly or children, causing unwell.

As another example, when it is determined according to the environmental information that the air is humid, the smog is severe, the dust is heavy, etc., a one-key optimization function is recommended, for example, the one-key optimization function realizes the optimization of the air quality of the air conditioner.

For another example, the user information includes recorded user behavior information. For example, when returning home in summer, users turn it on and adjust it to the preset temperature, and then gradually adjust it back, the smart temperature control mode will be recommended to the user. After the air conditioner detects that the user has returned home, the set temperature is automatically adjusted according to the user's setting information, without manual adjustment by the user, which provides convenience for the user.

Alternatively, the user information includes user behavior information within the preset range of the target air conditioner, and users within the preset range often use anti-direct blowing function, and the recommended anti-direct blowing function.

In this embodiment, the functions and/or modes recommended to the user meet the needs of the user and the environment in the environment where the target air conditioner is located, and the current air treatment module of the air conditioner can support its operation. To achieve the purpose of accurate push, it can provide users with timely and accurate services to meet the needs of users.

In an embodiment, there are multiple ways to generate the recommendation information corresponding to the target object and output the recommendation information (target function and/or target mode), such as directly recommending the recommendation information corresponding to the target object to the user's mobile terminal in the form of text messages or short texts.

Alternatively, the recommendation information is displayed in a preset display manner on a display interface; the recommendation information is the target object. For example, the corresponding function and/or mode is displayed on the display screen of the target air conditioner, or the function and/or mode is displayed in a preset manner on the control interface of the target air conditioner in the mobile terminal to indicate that the user can subscribe to use the function and/or mode.

In an embodiment, the preset mode may be blinking. Alternatively, the preset manner may be to display the function and/or mode in a preset color manner.

In an embodiment, there may be multiple target objects. When there are multiple target objects, recommendation information corresponding to the target objects may be generated according to time periods, and the recommendation information may be output.

In this embodiment, the target air conditioner is provided with an installation location, and the installation location can selectively install an air treatment module, so that the target air conditioner has the ability to support various functions and/or modes. According to this, by configuring some functions and/or modes before leaving the factory, during use, according to the environmental data of the environment where the target air conditioner is located and the installed air treatment modules of the target air conditioner, the current required target functions and and/or target modes are determined; then the target function and/or target mode are recommended to the target air conditioner. That is to say, some functions and/or modes are recommended to the user when the user needs it, which can not only reduce the purchase cost, but also allow the user to subscribe and use the functions and/or functions supported by the target air conditioner in a timely manner according to user information and environmental information, making the air conditioner universal.

### Second embodiment:

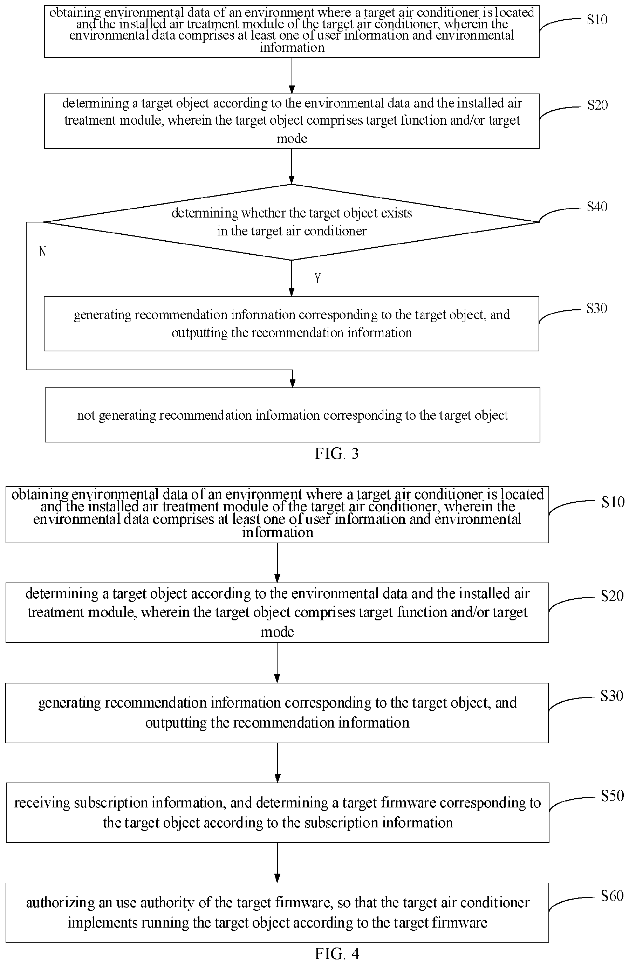

Please referring to FIG. 3, this embodiment is according to the further implementation mode proposed by the above-mentioned first embodiment:

In this embodiment, before the step of generating the recommendation information corresponding to the target object and outputting the recommendation information, the method further includes:
Step S40, determining whether the target air conditioner has the target object;
When it is determined that the target air conditioner does not have the target object, step S30 is performed: generating recommendation information corresponding to the target object, and outputting the recommendation information.

When the target air conditioner has the target object, no recommendation information corresponding to the target object is generated.

In this embodiment, before recommending the target function and/or the target mode to the target air conditioner, the current function and/or mode of the target air conditioner is obtained first; when the functions and/or modes currently possessed by the air conditioner include the target function and/or target mode, it is determined that the target object exists in the target air conditioner; at this time, there is no need to generate recommendation information corresponding to the target object to the target air conditioner and output the recommendation information.

When the function and/or mode currently possessed by the air conditioner does not include the target function and/or target mode, it is determined that the target air conditioner does not have the target object; and at this time, the recommending information corresponding to the target object is generated to the target air conditioner, and the recommending information is output, so that users can subscribe and use the target object.

In this embodiment, before recommending the target object, it is first determined whether the target object exists in the target air conditioner. If it does not exist, the recommendation information corresponding to the target object is generated and the recommendation information is output; if it exists, no recommendation is needed to avoid recommending useless information to users and affecting user experience.

### Third embodiment:

Please referring to FIG. 4, this embodiment is according to all the above-mentioned embodiments. In an implementation manner, in this embodiment, after the step of generating the recommendation information corresponding to the target object and outputting the recommendation information, the method further includes:
Step S50, receiving the subscription information, and determining the target firmware corresponding to the target object according to the subscription information;
Step S60, authorizing the use authority of the target firmware, so that the target air conditioner implements running the target object according to the target firmware.

After the cloud server generates recommendation information corresponding to the target object to the user and outputs the recommendation information, the user can trigger the subscription information of the target object according to the mobile terminal. After receiving the subscription information, the cloud server determines the target firmware of the target object according to the subscription information, and then authorizes the use authority of the target firmware, so that the user can enable the target function and/or target mode of the target air conditioner, and the air conditioner implements and runs the target function and/or target mode according to the target firmware.

It should be noted that the target refers to the software or program that controls the air conditioner to run the target object. According to the software or program, the air conditioner can control the execution of each execution component of the air conditioner to achieve the target function and/or mode.

In an implementation manner, the manner of authorizing the use authority of the target firmware includes but is not limited to the following embodiments:
For example, an unlock command is sent to the target air conditioner, so that the target air conditioner unlocks target firmware pre-stored in the target air conditioner according to the unlock command.

Alternatively, the target firmware is directly sent to the target air conditioner, so as to install the target firmware in the target air conditioner.

In an embodiment, the subscription information includes at least one of the target object and subscription time information of the target object. When receiving the subscription information, the target firmware is determined according to the target object; the authorization duration is determined according to the subscription time information; and then the use authority of the target firmware is authorized according to the authorization duration.

It is understood that, there is a fee to use and download the firmware. In this embodiment, the user can subscribe to the use authority of the firmware according to the current needs and the duration of the demand. In this way, the user does not need to open the use authority of the firmware for a long time. Compared with purchasing long-term use authority, it can save costs and avoid unnecessary waste.

In an embodiment, the subscription information further includes payment information; and after the cloud server determines that the payment is successful according to the payment information, the target firmware corresponding to the target object is determined according to the subscription information, and then the use authority of the target firmware is authorized.

In an embodiment, the payment amount corresponds to the authorization period, and the longer the authorization period, the longer the payment amount.

In an embodiment, this embodiment authorizes the use authority of the target object through remote authorization. For example, after the user successfully subscribes, the cloud service performs remote authorization on the device, and unlocks the function in the device according to the subscription time, and the user can use this function during the subscription period.

In an embodiment, after the step of authorizing the use authority of the target firmware, the method further includes:
displaying the target object corresponding to the target firmware.

In this embodiment, after the use authority of the target firmware is authorized, the target object is displayed on the control interface of the mobile terminal. Alternatively, the target object is displayed on a display panel of the air conditioner.

It can be understood that, in some embodiments, the step of displaying the target object of the target firmware object includes: switching the display mode of the target object of the target firmware object to a touchable mode. That is to say, in this embodiment, when the use authority of the target object is not authorized, the display interface displays that the target object is in an untouchable state; and after the use authority of the target object is authorized, the display state of the target object is switched to a touchable state in order to facilitate the user to trigger the air conditioner to run the target object according to the target object.

Further, in an optional embodiment, when the subscription information is received, and after the step of determining the target firmware corresponding to the target object according to the subscription information, the method further includes:
obtaining the installed firmware of the target air conditioner;

The step of authorizing the use authority of the target firmware is performed when the installed firmware includes the target firmware.

When the installed firmware does not include the target firmware, the target firmware is downloaded and the target firmware is installed.

In an implementation manner, in this embodiment, after the target firmware of the target object is determined, the installed firmware of the target air conditioner is obtained, and it is determined from the installed firmware whether the air conditioner needs to download the target firmware. If the target firmware has been installed in the air conditioner but is not authorized to be used, then the use authority of the target firmware is authorized. If the target firmware is not installed in the air conditioner (as recommended for the first time), then the target firmware is downloaded and the target firmware is installed. And the use authority of the target firmware is open.

In an implementation manner, in an embodiment where the execution terminal is a cloud server, the firmware is downloaded and installed to the target air conditioner through OTA.

In an implementation manner, in this embodiment, the user may authorize one-click subscription according to the recommended target object. Alternatively, recommendation information corresponding to the target object is generated, and the recommendation information is output. After the user triggers, it jumps to the subscription link of the target object, and the user triggers the subscription information according to the subscription link.

In this embodiment, the user updates and upgrades the function and/or mode of the air conditioner by subscribing to the target object, without repurchasing a new air conditioner, which saves the hardware cost of the air conditioner. Based on software upgrade, the air conditioner can be upgraded, thereby increasing the usability of the air conditioner, and making the air conditioner universal.

In one implementation, according to all the above-mentioned embodiments, this embodiment of the present application provides a recommendation system for an air conditioner. The recommendation system includes: a multi-modal interaction unit, a software function adaptation unit, an OTA function upgrade unit, a remote authorization unit and software function recommendation unit.

The multi-modal interaction unit is used to interact with the cloud server, and the user interacts with the cloud server through various entrances. For example: air conditioner, large screen, wire controller, APP, WeChat/mini program, voice, etc.;
The software function adaptation unit is used to adapt the software function package of the installed air treatment module of the air conditioner; for example, according to the existing air treatment module of the air conditioner/wire controller and other equipment, the software function package that the air treatment module can support is obtained, which contains a number of supported software functions.

The OTA function upgrade unit is used to upgrade the adapted software function package on the air conditioner online. For example, after the user subscribes, the unit can be used to upgrade the selected software function package in the air conditioner/wire controller device online.

The software functions used by the remote authorization unit for remote authorization adaptation include, for example, according to the multi-modal interaction unit interacting with cloud services, after the cloud server determines the adapted software function package according to the software function adaptation unit, the software package in the air conditioner/wire controller device can be authorized, unlocked and available by this unit.

The software function recommendation unit is used for recommending functional software packages to users. For example: according to user information, air environment, and behavior records, through statistical learning models, the recommendation of software function packages is obtained and sent to users. For example: active reminders, automatic controls, etc. can be authorized.

In an implementation manner, an embodiment of the present application further provides a computer program product; the computer program product includes a recommendation program code, and when the recommendation program code is executed by a processor, various embodiments of the above adjustments are implemented.

It should be noted that the above are only optional embodiments of the present application, and are not intended to limit the protection scope of the present application. Any equivalent structure or equivalent process conversion made by using the specification and drawings of the present application, or directly or indirectly used in other relevant technical fields, all are equally included in the protection scope of the present application.

## Claims

1. A recommendation method for an air conditioner, wherein the air conditioner comprises an installation position where at least one air treatment module is selectively installed, **characterized by** comprising:
obtaining environmental data of an environment where a target air conditioner is located and the installed air treatment module of the target air conditioner, wherein the environmental data comprises at least one of user information and environmental information;
determining a target object according to the environmental data and the installed air treatment module, wherein the target object comprises target function and/or target mode; and
generating recommendation information corresponding to the target object, and outputting the recommendation information.

2. The recommendation method for the air conditioner according to claim 1, wherein the determining the target object according to the environmental data and the installed air treatment module comprises:
determining an appropriate first target object according to the user information and/or the environmental information, wherein the user information comprises at least one of user identity and user historical behavior data, and the environmental information comprises an air environment and/or a location;
determining the first target object supported by the target air conditioner according to the installed air treatment module; and
determining the target object according to the first target object and a second target object.

3. The recommendation method for the air conditioner according to claim 1, wherein before the generating the recommendation information corresponding to the target object, and outputting the recommendation information, the method further comprises:
determining whether the target object exists in the target air conditioner; and
in response to that the target object does not exist in the target air conditioner, performing the generating the recommendation information corresponding to the target object and outputting the recommendation information.

4. The recommendation method for the air conditioner according to claim 1, wherein the generating the recommendation information corresponding to the target object and outputting the recommendation information comprises:
generating the recommendation information corresponding to the target object, and displaying the recommendation information on a display interface in a preset display manner.

5. The recommendation method for the air conditioner according to claim 1, wherein after the generating the recommendation information corresponding to the target object and outputting the recommendation information, the method further comprises:
receiving subscription information, and determining a target firmware corresponding to the target object according to the subscription information; and
authorizing an use authority of the target firmware, so that the target air conditioner implements running the target object according to the target firmware.

6. The recommendation method for the air conditioner according to claim 5, wherein after the authorizing the use authority of the target firmware, the method further comprises:
displaying the target object corresponding to the target firmware.

7. The recommendation method for the air conditioner according to claim 5, wherein after the receiving subscription information, and determining the target firmware corresponding to the target object according to the subscription information, the method further comprises:
obtaining an installed firmware of the target air conditioner; and
in response to that the installed firmware comprises the target firmware, performing the authorizing the use authority of the target firmware.

8. The recommendation method for the air conditioner according to claim 7, wherein after the obtaining the installed firmware of the target air conditioner, the method further comprises:
in response to that the installed firmware does not comprise the target firmware, downloading the target firmware and installing the target firmware.

9. An air conditioner, **characterized by** comprising:
a memory;
a processor; and
a recommendation program stored in the memory and operable on the processor;
wherein when the recommendation program is executed by the processor, steps of the recommendation method for the air conditioner according to any one of claims 1 to 8 are realized.

10. A readable storage medium, storing a recommendation program, **characterized in that** when the recommendation program is executed by a processor, steps of the recommendation method for the air conditioner according to any one of claims 1 to 8 are realized.
